Europäisches Patentamt

European Patent Office

Office européen des brevets

(19)

(11) Veröffentlichungsnummer: **0 082 951**
B1

(12)

# EUROPÄISCHE PATENTSCHRIFT

(45) Veröffentlichungstag der Patentschrift:
01.04.87

(51) Int. Cl.⁴: **B 60 K 41/04**

(21) Anmeldenummer: 82110704.2

(22) Anmeldetag: 19.11.82

(54) Vorrichtung zur Steuerung einer Kraftfahrzeug-Antriebseinheit.

(30) Priorität: 24.12.81 DE 3151351

(43) Veröffentlichungstag der Anmeldung:
06.07.83 Patentblatt 83/27

(45) Bekanntmachung des Hinweises auf die Patenterteilung:
01.04.87 Patentblatt 87/14

(84) Benannte Vertragsstaaten:
AT FR GB IT

(56) Entgegenhaltungen:
AU - B - 505 166
DE - A - 2 712 327
DE - A - 2 811 574
DE - A - 2 843 256

(73) Patentinhaber: M A N Technologie GmbH, Dachauer
Strasse 667, D-8000 München 50 (DE)

(72) Erfinder: Dreher, Gunther, Dipl.-Ing., Überlinger Weg 8,
D-8000 München 60 (DE)
Erfinder: Lexen, Gerald, Dipl.-Ing., Thelottstrasse 14,
D-8000 München 45 (DE)

**Beschreibung**

Die Erfindung bezieht sich auf eine Kraftfahrzeug-Antriebseinheit mit einer Steuervorrichtung, wobei die Antriebseinheit aus einer Brennkraftmasche und einem in seiner Übersetzung einstellbaren Getriebe besteht, und die Steuervorrichtung einen einzigen Drehzahlsensor, als Sollwertgeber ausgebildete Fahr- und Bremspedale, einen Motor-Funktionsgeber und einen Drehzahl-Funktionsgeber, die eingangsseitig mit den Sollwertgebern verbunden sind, sowie eine Getriebesteuerung, die eingangsseitig mit dem Drehzahl-Funktionsgeber verbunden ist enthält, wobei der Motor-Funktionsgeber auf ein Brennstoffzufuhr-Stellglied zur Regelung des Moments der Kraftmaschine einwirkt und die Getriebesteuerung in Abhängigkeit von einem Sollwertsignal des Übersetzungsverhältnisses die Stellsignale für das Getriebe errechnet und auf ein das Übersetzungsverhältnis des Getriebes beeinflussendes Stellglied zur Steuerung der Motordrehzahl einwirkt, wobei das Sollwertsignal des Übersetzungsverhältnisses sich aus der Verknüpfung des Ausgangssignales des Drehzahl-Funktionsgebers mit dem Messwert des Drehzahlsensors ergibt, gemäss dem Oberbegriff des Anspruchs 1.

Aus der DE-A-2 712 327 ist eine Vorrichtung zur Steuerung von Kraftfahrzeug-Antriebseinheiten dieser Art bekannt, bei dem mit dem Drehzahlsensor die Drehzahl am Getriebeeingang gemessen wird. Diese bekannte Lösung ist beispielsweise für hydrostatisch-mechanische Leistungsverzweigungsgetriebe problematisch, da das Übersetzungsverhältnis bei derartigen Getrieben nicht genau definier- oder errechenbar ist, weil das Verhältnis sich durch Lekagen verändert, die vom Druck, der Temperatur und der Drehzahl abhängig sind. Eine Messung der Motordrehzahl würde daher kein genaues Mass für die Fahrzeuggeschwindigkeit ergeben.

Kraftfahrzeug-Antriebseinheiten mit Regeleinrichtungen sind bekannt. Durch die DE-A-2 811 574 ist eine Regelung bekannt geworden, die Umschalter benötigt, die je nach Fahrzustand verschiedene Kennfelder anwählen, welche die Betätigung der Drosselklappe oder des Verstellhebels für die Einspritzpumpe beeinflussen. Um z.B. rasch erhöhte Leistung bereitzustellen, wird zusätzlich die Winkelgeschwindigkeit des Fahrpedals gemessen, wodurch auf eine leistungsoptimierte Regelung umgeschaltet wird. Durch die Umschaltung kann jedoch nur jeweils ein Optimierungskriterium gleichzeitig erfüllt werden.

Die Umschalter werden bei einer bekannten Steuereinrichtung der obengenannten Art (DE-A-2 843 256) durch einen sogenannten Querregler ersetzt, der einen stetigen Übergang zwischen leistungsoptimierter und verbrauchsoptimierter Betriebsweise ermöglicht.

Nachteilig bei dieser Einrichtung ist jedoch, dass aufgrund der überwiegend mechanischhydraulisch arbeitenden Regeleinrichtung eine flexible und sehr genaue Anpassung an unterschiedliche Motor- und Getriebeeigeschaften nicht möglich ist.

Der Erfindung liegt die Aufgabe zugrunde, eine Kraftfahrzeug-Antriebseinheit der eingangs genannten Art zu entwickeln, bei der mit fertigungstechnisch einfachen Mitteln eine Kraftfahrzeug-Antriebseinheit mit hydrostatisch-mechanischem Leistungsverzweigungsgetriebe unter möglichst genauer Anpassung an die unterschiedlichen Motor- und Getriebeeigenschaften leistungsoptimal gesteuert werden kann.

Die Aufgabe wird erfindungsgemäss durch die im Anspruch 1 gekennzeichneten Merkmale gelöst.

Hierdurch ist es möglich, ebenfalls mit nur einer Messung, nämlich der Antriebs-Ausgangsdrehzahl, eine Antriebseinheit mit hydrostatisch-mechanischem Leistungsverzweigungsgetriebe verbrauchsoptimal betreiben zu können, ohne auf die Möglichkeit verzichten zu müssen, jederzeit rasch die Leistung bis zum Maximalwert steigern zu können. Dabei bleiben Forderungen, die sich aus dem Motorkennlinienfeld und solche die sich aus dem Getriebekennlinienfeld ergeben, völlig berücksichtigt ohne, dass eine Art Strukturumschaltung im Regler notwendig wäre.

Auch kann die geforderte Leistung jederzeit schnell bereitgestellt werden, da primär die Motorleistung (Moment, Drehzahl) entsprechend optimaler Verläufe im Kennfeld eingestellt wird.

Die Getriebesteuerung realisiert das gewünschte Übersetzungsverhältnis sehr schnell unter Berücksichtigung der Getriebeeigenschaften, wie Schaltstufen, Forderung nach voller Öffnung mindestens eines Hydrostaten zur Verbesserung des Wirkungsgrades, Minimierung des vom hydrostatischen Zweig übertragenen Leistungsflusses.

Da das Verfahren nur einen einzigen Sensor benötigt, ist eine sehr robuste Steuerung möglich, wenn z.B. dieser Sensor redundant ausgeführt wird.

In einer einfachen Weise lässt sich zum Sollwertsignal des Übersetzungsverhältnisses ein Korrektursignal addieren, mit dem Nebeneinflüsse wie Temperatur, Leckage im hydrostatischen Zweig, Fahrzustände, berücksichtigt werden können.

Die Erfindung wird nachstehend anhand eines in der Zeichnung schematisch dargestellten Ausführungsbeispieles näher erläutert. Es zeigen:

Fig. 1 Einen allgemeinen Aufbau einer Kraftfahrzeug-Antriebseinheit und

Fig. 2 das Ausführungsbeispiel.

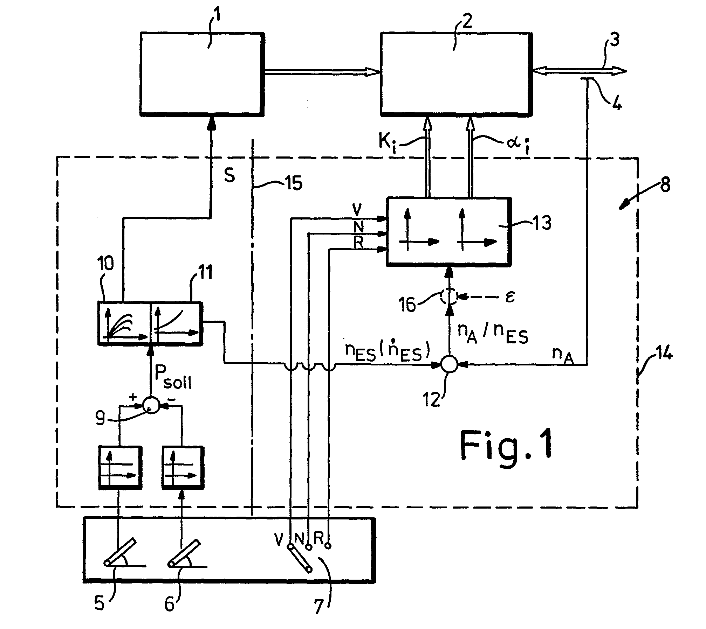

In Fig. 1 ist zur besseren Übersicht eine Kraftfahrzeug-Antriebseinheit, bestehend aus einer Brennkraftmaschine 1 und einem Getriebe 2 mit einer Steuervorrichtung im Blockschema gezeigt.

Am Ausgang 3 des Getriebes 2 ist ein Drehzahlsensor 4 angeordnet. Das Fahrpedal 5 und das Bremspedal 6 sowie ein Vorwahlschalter 7 für Vorwärts V, Neutral N, und Rückwärts R dienen als Sollwertgeber für eine Steuervorrichtung 8.

Von der Stellung der Pedale 5 und 6 ausgelöste Signale werden an einer Summationsstelle 9 ad-

diert und als Sollwert $P_{soll}$ einem Motor-Funktionsgeber 10 ist die Kennlinie für den optimalen Motorbetrieb gespeichert. Unter Vorgabe des Sollwertes wird im Funktionsgeber 10 entsprechend dem Motorkennfeld ein Steuersignal S geliefert, das je nach Ausführung des Brenneinspritzsystems der Brennkraftmaschine 1 entweder die Stellung einer Drosselklappe oder eines Stellhebels einer Einspritzpumpe verbraucheroptimal gesteuert.

Im Drehzahl-Funktionsgeber ist die Kennlinie für den optimalen Betrieb des Motors 1 gespeichert. Der entsprechend den Pedalstellungen vorgegebene Sollwert $P_{soll}$ wird im Drehzahl-Funktionsgeber 11 unter Berücksichtigung der gespeicherten Kennlinie zu einem Eingangs-Soll-Drehzahlwert $n_{ES}$ verarbeitet, der mit der vom Sensor 4 gelieferten Ausgangs-Ist-Drehzahl $n_A$ in einer Verknüpfung 12 zu einem Übersetzungsverhältnis Sollwert $n_A/n_{ES}$ verknüpft wird.

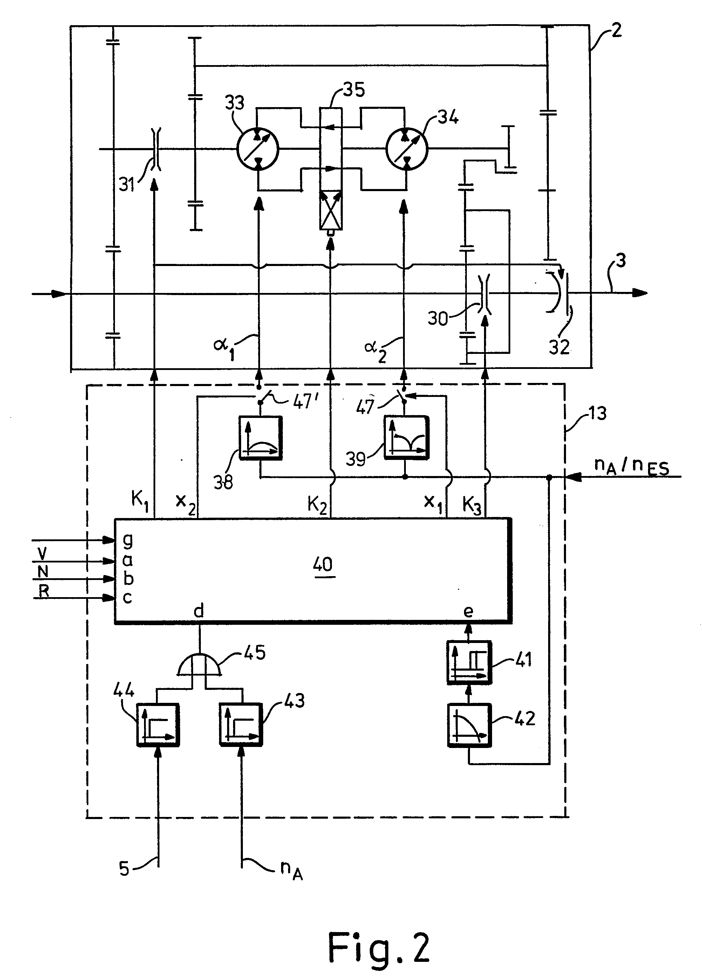

In einer im Zusammenhang mit dem in Fig. 2 dargestellten, erfindungsgemässen Ausführungsbeispiel unten näher beschriebenen Getriebe-Steuerung 13 wird aus dem Übersetzungsverhältnis Sollwert $n_A/n_{ES}$ und vom Vorwahlschalter 7 ausgelöste Signale V, N bzw. R und unter Berücksichtigung weiterer getriebespezifischer Kennkurven auf das Getriebe 2 einwirkende Steuersignale $K_i$ und $\alpha i$ gebildet. Die auf diese Weise angesteuerte Brennkraftmaschinen-Getriebeeinheit 1, 2 arbeitet verbrauchs- und leistungsoptimal, und wobei ausserdem die vom Fahrer jeweils geforderte Maximalleistung auch erbracht wird und wobei lediglich ein Sensor, nämlich der Drehzahlsensor 4 erforderlich ist.

In Fig. 2 ist ein hydrostatisch-mechanisches Leistungsverzweigungsgetriebe 2 mit einer ersten Kupplung 30 und zwei wechselseitig arbeitenden Kupplungen 31 und 32 sowie mit zwei Hydrostaten 33, 34 dargestellt. Die Hydrostate 33, 34 arbeiten abwechselnd als Motor und Pumpe und sind über ein Schaltventil 35 miteinander verbunden.

Die untere Hälfte von Fig. 2 stellt detailliert die Getriebe-Steuerung dar. Sie weist zwei Funktionsgeber 38 und 39 auf, welche aus dem Ansteuersignal $n_A/n_{ES}$ für das Übersetzungsverhältnis die Sollwerte $\alpha_1$, $\alpha_2$ für die Schwenkwinkel der Hydrostaten 33 und 34 erzeugen. Die Getriebe-Steuerung 13 enthält ferner eine Logik 40 sowie weitere Funktionen 41 bis 45.

Mit 41 ist ein hysteresebehafteter Komparator bezeichnet, der ein Schaltsignal für das Umschalten der Kupplungen 30–32 liefert. Der Komparator 41 ist so abgestimmt, dass er bei einem Wert $n_A/n_{ES}$ des Übersetzungsverhältnisses, der dem Schaltpunkt entspricht, nämlich wenn der Hydromotor 33 zu Null geschwenkt ist, das Schalten der Kupplungen auslöst. Der Komparator 41 erhält das von einem Tiefpassfilter 42 verzögerte Übersetzungsverhältnis-Sollwertsignal $n_A/n_{ES}$. Durch die mit diesen beiden Funktionen 41, 42 verzögert weitergegebenen Signale, werden schnelle Änderungen des Fahrers, wie z.B. Wechselspiele des Gaspedals oder auch überlagerte Schwingungen

in einem Korrektursignal $\varepsilon$ unterdrückt und damit unnötige Schaltungen vermieden.

Mit der Schaltung 43 bis 45 soll das Kriechen im Stillstand vermieden werden, was beispielsweise von einigen Automatgetrieben bekannt ist. Hiermit wird ein Signal d erzeugt, das Null ist, wenn beide Funktionen 43 und 44 Signale Null liefern. Dieses ist der Fall, wenn das Fahrpedal 5 nicht betätigt ist und das Fahrzeug steht, d.h. wenn $n_A$ = o. Über die Logik 40 wird darauf ein Signal $x_1$ = o gebildet, das einen Schalter 47 öffnet und damit die Ansteuerung vom Hydrostaten 34 unterbricht, so dass eine Bewegung und damit ein Kriechen des Fahrzeuges wirksam verhindert wird. Wenn die Schwelle 43 durch die Bewegung des Fahrzeuges oder die Schwelle 44 durch Gasgeben oder beide überschritten sind, wird ein Signal d und folglich ein Signal $x_1$ gebildet, das den Schalter 47 schliesst. Der Hydrostat 34 wird hierbei in der gewünschten Weise vom Sollsignal $n_A/n_{ES}$ angesteuert.

Ferner erhält die Logik 40 Signale a bis c vom Vorwahlschalter 7 und weitere Signale, die mit g zusammengefasst sind. Diese können beispielsweise den Steueröldruck $g_1$ und das Anlassen $g_2$ anzeigen.

In der Logik 40 werden die Eingangssignale a bis e und g, bzw. $g_1$ und $g_2$ folgendermassen verknüpft. Erhält die Logik 40 ein Signal $g_1$, das anzeigt, dass Öldruck vorhanden ist, und ein Signal d, wie oben beschrieben, dann gibt sie durch Bildung des Signals $x_1$ die Ansteuerung des Hydrostaten 34 frei, wenn ein Signal a oder c ansteht, d.h. ein Gang eingelegt ist.

Ein äquivalentes Signal $x_2$ für den Ansteuerungskreis $\alpha_2$, für den zweiten Hydrostaten 33 wird gebildet, wenn der Öldruck durch $g_1$ signalisiert wird und eine Verzögerungszeit $t-j$ nach einer Schaltungsänderung verstrichen ist, was durch das Signal e angezeigt wird.

Ferner liefert die Logik 40 drei Sollsignale $K_1$, $K_2$ und $K_3$ für die Kupplungen 31 (oder 32) und 30 bzw. das Ventil 35.

Die Kupplung 31 (oder 32) wird mit dem Sollsignal $K_1$ betätigt, wenn der Öldruck stimmt und keine Anlasser-Stellung besteht, d.h. kein Signal $g_1$ und kein Signal $g_2$ ansteht.

Das Ventil 35, das die Verbindungsleitungen der Hydrostaten 33 und 34 zu einer Kreuzverbindung schaltet, wird vom Sollsignal $K_2$ gesteuert. Im Vorwärtsgang V (Signal a) ist das Signal $K_2$ gleich dem Signal $K_1$, womit das Ventil 35 in gleicher Weise wie die Kupplung 31 schaltet. Bei Rückwärtsgang R (Signal c) schaltet das Ventil 35 dagegen entgegengesetzt zur Kupplung 31.

Die oben beschriebenen logischen Verknüpfungen können wie folgt zusammengefasst werden.

$$x_1 = g_1 \wedge (a \vee c) \wedge d$$
$$x_2 = g_1 \wedge (a \vee c) \wedge (e = e_{t-j})$$
$$K_1 = g_1 \wedge \bar{g} \wedge \bar{e}$$
$$K_2 = (K_1 \wedge a) \vee (\bar{K}_1 \wedge b)$$

Wobei $\wedge$ = und, $\vee$ = oder, $-$ = nicht ist.

## Patentanspruch

Kraftfahrzeug-Antriebseinheit mit einer Steuervorrichtung (8), wobei die Antriebseinheit aus einer Brennkraftmaschine (1) und einem in seiner Übersetzung einstellbaren Getriebe (2) besteht, und die Steuervorrichtung (8) einen einzigen Drehzahlsensor (4), als Sollwertgeber (5, 6) ausgebildete Fahr- und Bremspedale, einen Motor-Funktionsgeber (10) und einen Drehzahl-Funktionsgeber (11), die eingangsseitig mit den Sollwertgebern (5, 6) verbunden sind, sowie eine Getriebesteuerung (13), die eingangsseitig mit dem Drehzahl-Funktionsgeber (11) verbunden ist, enthält, wobei der Motor-Funktionsgeber (10) auf ein Brennstoffzufuhr-Stellglied zur Regelung des Moments der Kraftmaschine (1) einwirkt und die Getriebesteuerung (13) in Abhängigkeit von einem Sollwertsignal des Übersetzungsverhältnisses ($n_A/n_{ES}$), nämlich aus der Getriebe-Ausgangs-Ist-Drehzahl ($n_A$) und der Getriebe-Eingangs-Soll-Drehzahl ($N_{ES}$), die Stellsignale ($K_i$, $\alpha_i$) für das Getriebe (2) errechnet und auf ein das Übersetzungsverhältnis des Getriebes (2) beeinflussendes Stellglied zur Steuerung der Motordrehzahl einwirkt, wobei das Sollwertsignal des Übersetzungsverhältnisses sich aus der Verknüpfung des Ausgangssignales des Drehzahl-Funktionsgebers (11) mit dem Messwert des Drehzahlsensors (4) ergibt, dadurch gekennzeichnet, dass das Getriebe (2) ein hydrostatisch-mechanisches Leistungsverzweigungsgetriebe ist, das Hydrostaten (33, 34) und Kupplungen (30 bis 32) aufweist, dass das Sollwertsignal des Übersetzungsverhältnisses ($n_A/n_{ES}$) die Hydrostaten (33, 34) des Getriebes (2) ansteuert, dass in der Getriebesteuerung (13) mindestens ein Schaltelement (47, 47') vorgesehen ist, das die Ansteuerung der Hydrostaten (33, 34) freigibt oder sperrt, dass die Getriebessteuerung (13) ferner eine Logik (40) enthält, dass die Logik (40) in Abhängigkeit von an Eingängen (a, b, c, d, e, g) der Logik (40) eingebbaren Signalen beeinflusst wird, die vom Bedienungsfeld des Fahrers kommen und sich aus dem gegenwärtigen Zustand des Getriebes ergeben, dass die Logik (40) auf mindestens eine Kupplung (30 bis 32) des Getriebes (2) einwirkt, und dass der Drehzahlsensor (4) zum Abfühlen der Getriebeausgangsdrehzahl am Getriebeausgang (3) angeordnet ist.

## Claim

A motor vehicle drive unit with a control device (8), the drive unit consisting of an internal combustion engine (1) and an adjustable-ratio transmission (2), and the control device (8) comprises a single speed sensor (4), an accelerator and brake pedal constructed as a set-value transmitter (5, 6), an engine function transmitter (10) and a speed function transmitter (11), which are connected to the set-value transmitters (5, 6) on the input side, and a transmission control (13) which is connected on the input side to the speed function transmitter (11), the engine function transmitter (10) acting on a fuel supply adjustment element in order to regulate the torque of the engine (1), and the transmission control (13) calculating the adjusting signals ($K_i$, $\alpha_i$) for the transmission (2) in dependence on a set-value signal of the transmission ratio ($n_A/n_{ES}$), i.e. from the transmission output actual speed ($n_A$) and the transmission input set-speed ($n_{ES}$), and acting on an adjusting element which influences the transmission ratio of the transmission (2), in order to control the engine speed, the set-value signal of the transmission ratio being obtained from associating the output signal of the speed function transmitter (11) with the measurement of the speed sensor (4), characterised in that the transmission (2) is a hydrostatic-mechanical power splitting transmission, which comprises hydrostats (33, 34) and clutches (30–32); the set-value signal of the transmission ratio ($n_A/n_{ES}$) controls the hydrostats (33, 34) of the transmission (2); the transmission control (13) contains at least one switching element (47, 47') which releases or blocks the control of the hydrostats (33, 34); the transmission control (13) also contains a logic unit (40); the logic unit (40) is influenced in dependence on signals which are adapted to be input at inputs (a, b, c, d, e, g) of the logic unit (40), said signals originating from the driver's control panel and resulting from the current state of the transmission; the logic unit (40) acts on at least one clutch (30–32) of the transmission; and the speed sensor (4) is disposed at the transmission output (3) in order to sense the transmission output speed.

## Revendication

Ensemble d'entraînement pour véhicules à moteur comportant un dispositif de commande (8), l'ensemble d'entraînement se composant d'un moteur à combustion interne (1) et d'une transmission (2) à rapport de transmission réglable, et le dispositif de commande (8) comprenant un seul capteur de vitesse de rotation (4), une pédale d'accélération et une pédale de frein constituant un générateur de valeur de consigne (5, 6), un générateur de fonction de moteur (10) et un générateur de fonction de vitesse de rotation (11) qui sont reliés à l'entrée des générateurs de valeur de consigne (5, 6) ainsi qu'une commande de transmission (13) dont l'entrée est reliée au générateur de fonction de vitesse de rotation (11), le générateur de fonction de moteur (10) agissant sur un organe de réglage d'alimentation de carburant pour régler le couple fourni par le moteur (1) et le dispositif de commande de transmission (13) calculant les signaux de réglage ($K_i$, $\alpha_i$) de la transmission (2) en fonction d'un signal de valeur de consigne du rapport de transmission ($n_A/n_{ES}$), c'est-à-dire de la vitesse de rotation réelle en sortie de transmission ($n_A$) et de la vitesse de rotation de consigne à l'entrée de la transmission ($n_{ES}$), et agit sur un organe de réglage influençant le rapport de la transmission (2) pour commander la vitesse de rotation du moteur, le signal de valeur de consigne du rapport de transmission résultant de la combinaison du signal de sortie du générateur de fonction de vitesse de rotation (11) et de la grandeur de mesure du capteur de vitesse de rotation (4), caractérisé en ce que la transmission (2) est une transmission à dérivation de puissance hydrostatique-mécanique, comportant des dispositifs hydrostatiques (33, 34) et des embrayages (30 ... 32), en ce que le signal de valeur de consigne du rapport de transmission ($n_A/n_{ES}$) commandant les dispositifs hydrostatiques (33, 34) de la transmission (2), en ce qu'au moins un élément de commutation (47, 47') est prévu dans la commande de transmission (13), signal qui libère ou bloque la commande des dispositifs hydrostatiques (33, 34), en ce que la commande de transmission (13) comporte en outre une logique (40), cette logique influençant les signaux en fonction des signaux d'entrée (a, b, c, d, e, g) appliqués à cette logique (40), signaux qui arrivent du champ d'utilisation du conducteur et résultent de l'état instantané de la transmission, en ce que la logique (40) agit sur au moins un embrayage (30 ... 32) de la transmission (2) et en ce que le capteur de vitesse de rotation (4) est prévu pour détecter la vitesse de rotation de sortie à la sortie (3) de la transmission.

0 082 951

Fig.1

7

0 082 951

Fig.2

9